# EUROPEAN PATENT APPLICATION

(11) **EP 4 299 913 A1**
(43) Date of publication of application: **03.01.2024**
(21) Application number: 23182523.3
(22) Date of filing: 29.06.2023
(51) Int. Cl.: F04D 17/10, F04D 25/06, F04D 27/02, F04D 29/058, H02K 1/00

(54) **CENTRIFUGAL COMPRESSOR FOR REFRIGERATION SYSTEM AND REFRIGERATION SYSTEM**

(30) Priority: 01.07.2022 CN 202221677072 U
(71) Applicant: Carrier Corporation, Palm Beach Gardens, FL 33418 (US)
(72) Inventor: LI, Jiedong, Shanghai, 201206 (CN); YU, Lei, Shanghai, 201206 (CN); CAO, Chong, Shanghai, 201206 (CN); CAO, Jun, Shanghai, 201206 (CN)
(74) Representative: Dehns

(57) **Abstract**

The present application provides a centrifugal compressor for a refrigeration system, and a refrigeration system. The centrifugal compressor has a reverse braking function and comprises: a rotor shaft (4); a compressor impeller (43, 44) connected to the rotor shaft (4); a brake component (61, 62) on the rotor shaft (4), wherein a periphery of the brake component (61, 62) is made of magnetic conductive material; a plurality of sets of electromagnets (621, 622, 623) fixedly arranged radial outward of the brake component (61, 62); a sensor device (51, 52) for sensing a rotational speed and direction of the rotor shaft (4); and a controller connected to the sensor device (51, 52), wherein the controller receives signals from the sensor device (51, 52) and supplies power to the plurality of sets of electromagnets (621, 622, 623) based on the signals. The centrifugal compressor and the refrigeration system according to the various embodiments suppress the reverse rotation of the compressor rotor shaft (4) caused by a reverse airflow during unexpected shutdown.

## Description

The present invention relates to the field of refrigeration systems, in particular to a centrifugal compressor with reverse braking for a refrigeration system.

A refrigeration system usually comprises a compressor, a condenser, a throttling element, and an evaporator. The compressor pressurizes the gas, causing the pressure at its outlet to be higher than that at its inlet. However, when the compressor stops unexpectedly due to control factors or unexpected power outages, the high-pressure gas at the compressor outlet, such as in the condenser, will flow reversely toward the compressor inlet, such as to the evaporator, due to pressure difference. This reverse flow of gas will cause the compressor rotor shaft to rotate in a reverse direction, and then will cause undesired turbulent flow at the compressor impeller, unbalanced force on the compressor rotor, and compressor rotor vibration. This will generate a thrust on the rotor shaft bearing. In compressors using magnetic bearings, this kind of reverse rotation may cause impact against the catcher bearing due to excessive vibration of the compressor rotor, accompanied with loud noise, which, on the long run, will affect system stability and compressor service life. In the prior art, in order to prevent the reverse rotation of the compressor rotor shaft, a check valve may be mounted at the compressor outlet to prevent the generation of reverse airflow. However, during normal operation of the compressor, the check valve at the compressor outlet will create flow resistance, causing a pressure drop of the airflow at the compressor outlet when passing through the check valve, which affects the efficiency of the system. In addition, open and close of the check valve will also create significant noise and vibration.

The objective of at least the preferred embodiments of the present invention is to solve or at least alleviate the problems existing in the prior art.

According to a first aspect of the present invention, a centrifugal compressor for a refrigeration system is provided, which has a reverse braking function and comprises:
a rotor shaft;
a compressor impeller connected to the rotor shaft;
a brake component on the rotor shaft, wherein a periphery of the brake component is made of magnetic conductive material;
a plurality of sets of electromagnets fixedly arranged at radial outward of the brake component;
a sensor device for sensing a rotational speed and direction of the rotor shaft; and
a controller connected to the sensor device, wherein the controller receives signals from the sensor device and supplies power to the plurality of sets of electromagnets based on the signals.

Optionally, the plurality of sets of electromagnets each exert a braking force on the brake component of the rotor shaft when energized to suppress the reverse rotation of the rotor shaft, and the resultant force of the attractive forces exerted by the plurality of sets of electromagnets on the brake component of the rotor shaft is upward, where the resultant force of the attractive forces exerted by the plurality of sets of electromagnets is 10% -80% of the gravity of the rotor shaft.

Optionally, the plurality of sets of electromagnets have different number of turns and/or different supply voltages, thereby achieving an upward resultant force of the attractive forces exerted by the plurality of sets of electromagnets.

Optionally, the plurality of sets of electromagnets are consisted of a first electromagnet located directly below the brake component of the rotor shaft and a second electromagnet located directly above the brake component of the rotor shaft in the vertical direction, where when energized, the second electromagnet has a magnetic field intensity greater than that of the first electromagnet.

Optionally, the plurality of sets of electromagnets are consisted of a first electromagnet located directly below the brake component of the rotor shaft, and a second electromagnet and a third electromagnet located symmetrically on both sides above the brake component of the rotor shaft respectively in the vertical direction, where the first electromagnet, the second electromagnet, and the third electromagnet have substantially the same magnetic field intensity.

Optionally, each electromagnet of the plurality of sets of electromagnets comprises a magnetic conductor and a coil winding, wherein the magnetic conductor comprises an arc-shaped section, and a first end portion and a second end portion extending towards the brake component from both ends of the arc-shaped section. The coil winding is wound on the arc-shaped section, where when the coil winding is energized, the first end portion and the second end portion have opposite first and second polarities, respectively.

Optionally, each electromagnet of the plurality of sets of electromagnets comprises a magnetic conductor and a coil winding, wherein the magnetic conductor comprises an arc-shaped section, and a middle end portion, a first end portion and a second end portion extending towards the brake component respectively from the middle and from both ends of the arc-shaped section. The coil winding is wound on the middle end portion, where when the coil winding is energized, the middle end portion has a first polarity, and the first end portion and the second end portion have a second polarity opposite to the first polarity, respectively.

Optionally, the brake component is a brake disc connected to the rotor shaft, the brake disc is made of magnetic conductive material, and the centrifugal compressor further comprises an axial magnetic bearing assembly that restrains the rotor shaft axially, and radial magnetic bearing assemblies that support the rotor shaft radially from both ends of the rotor shaft, wherein the axial magnetic bearing assembly, the radial magnetic bearing assemblies and the plurality of sets of electromagnets are each connected to a backup power supply for supplying power in case of abnormal power outage.

Optionally, the sensor device comprises two proximity sensors arranged at the radial outward of the rotor shaft at the same axial position, at an interval in the circumferential direction. Detectable features are provided on the rotor shaft at the axial position corresponding to the proximity sensors. The controller determines whether the rotor shaft is rotating reversely or has a reversal trend based on the sequence and interval time of signals sent by the two proximity sensors, and supplies power to the plurality of sets of electromagnets when the rotor shaft is rotating reversely or has a reversal trend.

A refrigeration system is further provided, wherein the refrigeration system comprises a centrifugal compressor as described above.

The centrifugal compressor and refrigeration system effectively suppress the reverse rotation of the compressor rotor shaft caused by the reverse airflow during unexpected shutdown.

With reference to the accompanying drawings, the present invention will become easier to understand. Those skilled in the art would easily understand that these drawings are for the purpose of illustration, and are not intended to restrain the protection scope of the present invention. In addition, in the figures, similar numerals are used to denote similar components, wherein:
- FIG 1: is a structural schematic diagram of a centrifugal compressor;
- FIG 2: is a schematic diagram of an electric eddy current brake device;
- FIG 3: is a partially enlarged schematic diagram of the electric eddy current brake device of FIG 2;
- FIG 4: is a schematic diagram of another electric eddy current brake device; and
- FIG 5: is a schematic diagram of yet another electric eddy current brake device.

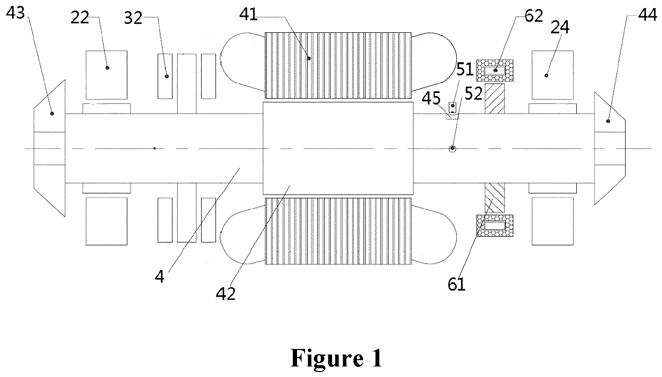

Referring first to FIG 1, the schematic diagram of the internal structure of a centrifugal compressor is illustrated. The centrifugal compressor comprises a housing (not shown), a stator 41 in the housing, and a rotor 42 on a rotor shaft 4 corresponding to the position of the stator 41 that provides rotational driving force for the rotor shaft 4. Impellers 43, 44 are arranged at both ends of the rotor shaft 4. The rotor shaft 4 is supported by radial magnetic bearing assemblies 22, 24 at the inner sides of the impellers 43, 44 at both ends. In addition, an axial magnetic bearing assembly 32 is arranged at one side between the radial magnetic bearing assembly 22 and the rotor 42 to restrain the rotor shaft 4 in the axial direction, while sensor devices 51, 52 and electric eddy current brake devices 61, 62 are arranged at the other side between the radial magnetic bearing assembly 24 and the rotor 42. It should be appreciated that the detailed embodiment shown in FIG 1 is only exemplary. For example, although the relative positions of the sensor device, the axial magnetic bearing, the motor rotor and the electric eddy current brake device in the axial direction are shown in the embodiment of FIG 1, in alternative embodiments, however, the axial positions of the respective devices can be interchanged or changed if practical. For another example, although the embodiments are described in conjunction with an oil-free compressor using magnetic bearings, the electric eddy current brake device according to the various embodiments can also be applied to other types of compressors, such as compressors using traditional bearings.

According to some embodiments, the sensor device can sense the rotational speed and direction of the rotor shaft 4. For example, the sensor device may comprise two proximity sensors 51, 52, such as Hall sensors, optical sensors, and magnetic sensors, that are arranged at radial outward of the rotor shaft 4 at the same axial position, at an interval in the circumferential direction. The two proximity sensors 51, 52 can be arranged at an interval of, for example, an angel of 90 degrees. There are detectable features, such as grooves 45, optical reflectors, or magnets, at the axial positions corresponding to the proximity sensors 51, 52 on the rotor shaft 4. When the grooves are close to the proximity sensors 51, 52, the proximity sensors will generate signals. The rotational direction and speed of the rotor shaft 4 can be determined through the sequence and interval time of the signals, thereby determining the rotational speed and direction of the rotor shaft 4. In addition, the rotation trend of the rotor shaft 4 can be obtained based on changes in the rotational speed, where this kind of determination can be achieved through logical circuits, which can be easily implemented by those skilled in the art.

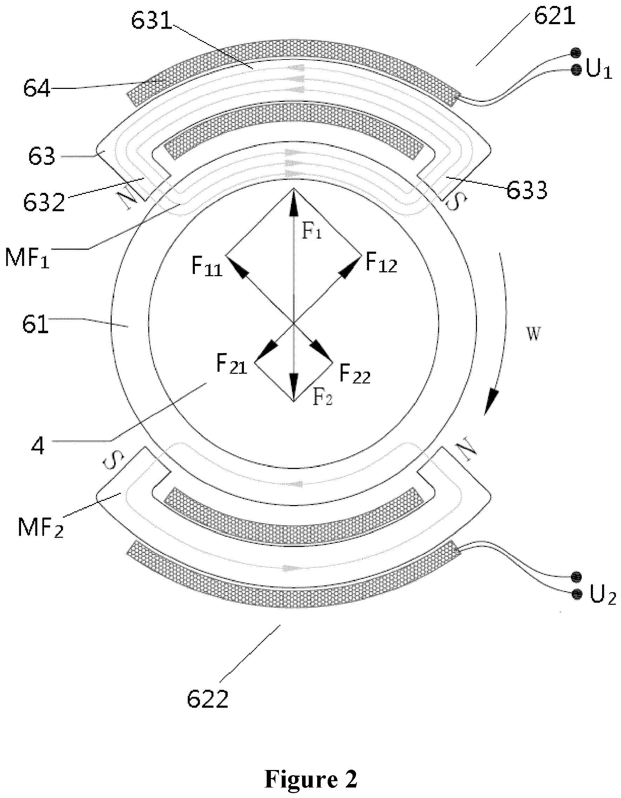

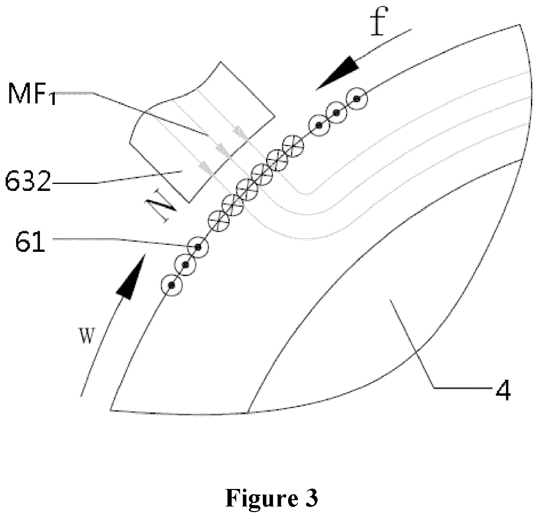

With continued reference to FIGS. 2 and 3, the specific structure of the electric eddy current brake device is described. The electric eddy current brake device comprises: a brake component 61 on the rotor shaft and a plurality of sets of electromagnets 621, 622 fixedly arranged at radial outward of the brake component 61. The plurality of sets of electromagnets 621, 622 act on the brake component 61 through magnetic fields, and a gap is provided between the plurality of sets of electromagnets 621, 622 and the brake component 61. At least the periphery of the brake component 61 is made of magnetic conductive material. In the embodiment shown, the brake component 61 is in the form of a magnetic conductor disk completely made of magnetic conductive material. Alternatively, the brake component 61 can also be integrally formed with the rotor shaft. The power supplies U1, U2 of the plurality of sets of electromagnets 621, 622 are controlled by a controller (not shown), which supplies power to the plurality of sets of electromagnets 621, 622 based on signals sent by the sensor devices 51, 52. For example, the controller supplies power to the plurality of sets of electromagnets , 622 when the sensor signal indicates that the rotor shaft is about to rotate reversely or is rotating reversely. The magnetic fields generated by the respective sets of electromagnets 621, 622 act on the brake component 61 to provide a braking force to the rotor shaft 4 to suppress its reverse rotation. A reversal trend can be defined as an intention to rotate reversely such as a situation where the rotor shaft is rotating forward at low speed and decelerating towards zero speed with a certain deceleration, which can then be determined as having a reversal trend. More specifically, as shown in FIG 3, the magnetic field generated by the electromagnet acts on the brake component 61. When the brake component 61 rotates, it passes through this magnetic field, causing eddy currents 68 to be generated on the surface of the brake component 61. Due to the eddy current effect, a circumferential braking force f is generated, which converts the kinetic energy of the rotor shaft into thermal energy, thus reducing the speed of the rotor shaft 61 to achieve braking, thereby suppressing the reverse rotation of the compressor rotor shaft and the associated collisions and noise.

Due to the fact that the brake component 61 is made of a conductive magnet, the plurality of sets of electromagnets 621, 622 will generate attractive forces for the brake component 61. In some embodiments, the resultant force of the attractive forces exerted by the plurality of sets of electromagnets 621, 622 on the brake component 61 of the rotor shaft is upward, such as vertically upward. The inventor found that when the rotor shaft rotates in the reverse direction, especially in the case of magnetic bearings, the magnetic bearings need to withstand both the gravity and the oscillation forces of the rotor shaft in the direction of gravity, where the direction of the oscillation force is uncertain and changing constantly. However, when the oscillation force coincides with the gravity, the resultant force of the two may exceed the capacity limit of the magnetic bearing and cause a collision between the rotor shaft and the catcher bearing. Therefore, by providing a counter force in the direction of gravity using a plurality of sets of electromagnets when the rotor shaft is in reverse rotation, the capacity margin of the radial magnetic bearing is ensured, which can more effectively avoid or alleviate collisions between the rotor shaft and the catcher bearing. It should be appreciated that the resultant force is within the range of 10% -80% of the rotor shaft gravity, as an example.

In the embodiment shown in FIG 2, the plurality of sets of electromagnets are consisted of a first electromagnet 622 located directly below the brake component of the rotor shaft and a second electromagnet 621 located directly above the brake component of the rotor shaft in the vertical direction. When energized, the magnetic field intensity of the magnetic field MF₁ of the second electromagnet 621 is greater than that of the magnetic field MF₂ of the first electromagnet 622, thereby achieving an upward resultant force. Specifically, the magnetic field intensity of the second electromagnet 621 and that of the first electromagnet 622 can be controlled by controlling the voltages U₁ and U₂ applied to them, or by controlling the number of turns of the coil windings of the second electromagnet 621 and the first electromagnet 622.

In the embodiment shown in FIG 2, the second electromagnet 621 and the first electromagnet 622 each comprise a magnetic conductor 63 and a coil winding 64. The magnetic conductor 63 comprises an arc-shaped section 631, and a first end portion 632 and a second end portion 633 extending towards the braking component from both ends of the arc-shaped section 631. In some embodiments, the arc-shaped section 631 may have a center of curvature concentric with the rotation center of the rotor shaft, while the first end portion 632 and the second end portion 633 may extend substantially radially. In some embodiments, the arc-shaped section 631 may extend a central angle corresponding to more than 60 degrees. When the coil winding 64 is wound on the arc-shaped section 631 and is energized, the first end portion 632 and the second end portion 633 have opposite first and second polarities, respectively. As shown in the figure, the first end portion 632 is the N-pole and the second end portion 633 is the S-pole. The first end portion 632 and the second end portion 633 of the second electromagnet 621 create attractive forces F₁₁ and F₁₂ for the braking component 61 of the rotor shaft, respectively, with a resultant force F₁ being vertically upward. Likewise, the first electromagnet 622 generates attractive forces F₂₁ and F₂₂ for the braking component 61 of the rotor shaft, respectively, with a resultant force F₂ being vertically downward. Due to the difference in magnetic field intensity, F₁ is greater than F₂, so the resultant force of the attractive forces of the plurality of sets of electromagnets for the braking component of the rotor shaft is vertically upward.

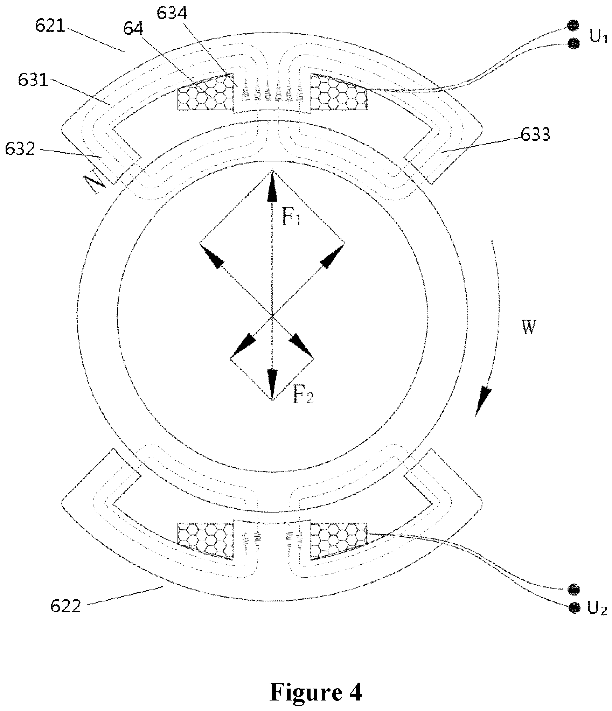

With continued reference to FIG 4, another embodiment is described. In this embodiment, the plurality of sets of electromagnets are arranged in the same manner as in the embodiment in FIG 2, but the specific structure of each electromagnet is different. Specifically, in this embodiment, each electromagnet comprises a magnetic conductor and a coil winding 64. The magnetic conductor comprises an arc-shaped section 631, and a middle end portion 634, a first end portion 632 and a second end portion 633 extending towards the braking component respectively from the middle and from both ends of the arc-shaped section 631. The coil winding 64 is wound on the middle end portion 634. When the coil winding 64 is energized, the middle end portion 634 has a first polarity, while the first end portion 632 and the second end portion 633 each have a second polarity opposite to the first polarity. Taking the second electromagnet 621 as an example, the middle end portion 634 can be the S-pole, and the first end portion 632 and the second end portion 633 can be N-poles. The first and second electromagnets shown in FIG 4 also generate a vertically downward resultant force F₂ and a vertically upward resultant force F₁, respectively, with F₁ being greater than F₂ to achieve a total vertically upward resultant force.

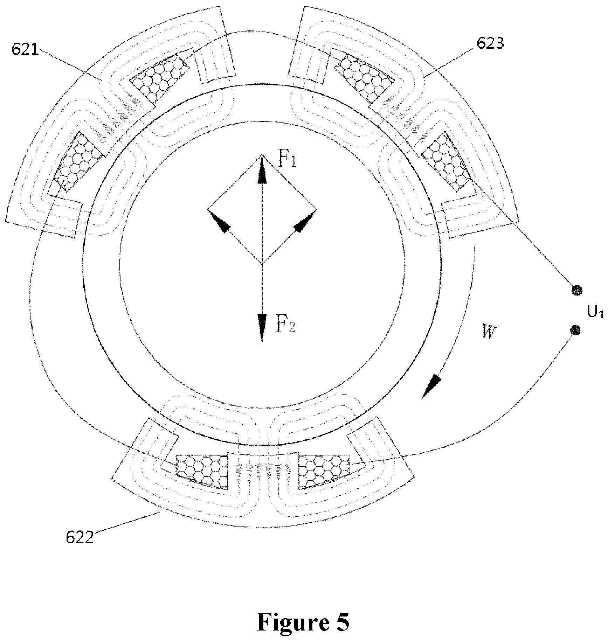

With continued reference to FIG 5, in this embodiment, the structure of each electromagnet is the same as that shown in FIG 4, but the number and arrangement of electromagnets are different. Specifically, in some embodiments, the plurality of sets of electromagnets are consisted of a first electromagnet 622 located directly below the brake component of the rotor shaft, and a second electromagnet 621 and a third electromagnet 623 located symmetrically on both sides above the brake component of the rotor shaft in the vertical direction. In this embodiment, the first electromagnet, the second electromagnet, and the third electromagnet have substantially the same magnetic field intensity. For example, they are connected in series to the same power supply U1 and have substantially the same number of coil turns. The resultant force F₁ of the attractive forces of the second electromagnet 621 and the third electromagnet 623 that are symmetrically arranged can be greater than the attractive force F₂ of the first electromagnet 622, thereby providing a vertically upward resultant force. It should be appreciated that based on the embodiments of the present disclosure, those skilled in the art can easily make changes to the specific structure and arrangement of the electromagnets to achieve the same functions. For example, the electromagnet in FIG 5 can be replaced with the one shown in FIG 2, or four or more sets of electromagnets can be arranged. In addition, it should be appreciated that in a compressor, axial magnetic bearing assemblies, radial magnetic bearing assemblies, and the plurality of sets of electromagnets are each connected to a backup power supply for supplying power in case of abnormal power outages, so that these components can still function even in the event of a sudden power outage in the compressor.

The specific embodiments described above are merely intended to describe the principles of the present invention more clearly, wherein various components are clearly shown or described to facilitate the understanding of the principles of the present invention. Those skilled in the art may, without departing from the scope of the present invention, make various modifications or changes to the described embodiments. Therefore, it should be understood that the scope of patent protection of the present invention is defined by the following claims.

## Claims

1. A centrifugal compressor for a refrigeration system, comprising:
a rotor shaft (4);
a compressor impeller (43, 44) connected to the rotor shaft (4);
a brake component (61, 62) on the rotor shaft (4), wherein a periphery of the brake component (61, 62) is made of magnetic conductive material;
a plurality of sets of electromagnets (621, 622, 623) fixedly arranged at radial outward of the brake component (61, 62);
a sensor device (51, 52) for sensing a rotational speed and direction of the rotor shaft (4); and
a controller connected to the sensor device (51, 52), wherein the controller receives signals from the sensor device (51, 52) and supplies power to the plurality of sets of electromagnets (621, 622, 623) based on the signals.

2. The centrifugal compressor according to claim 1, wherein the plurality of sets of electromagnets (621, 622, 623) each exerts a braking force on the brake component (61, 62) of the rotor shaft (4) to suppress reverse rotation of the rotor shaft (4) when energized, wherein a resultant force of attractive forces exerted by the plurality of sets of electromagnets (621, 622, 623) on the brake component (61, 62) of the rotor shaft (4) is upward, and wherein the resultant force of the attractive forces exerted by the plurality of sets of electromagnets is 10% - 80% of the gravity of the rotor shaft (4).

3. The centrifugal compressor according to claim 2, wherein the plurality of sets of electromagnets (621, 622, 623) have different number of turns and/or different supply voltages, thereby achieving an upward resultant force of the attractive forces exerted by the plurality of sets of electromagnets.

4. The centrifugal compressor according to claim 2 or 3, wherein the plurality of sets of electromagnets (621, 622, 623) are consisted of a first electromagnet (622) located directly below the brake component (61, 62) of the rotor shaft (4) and a second electromagnet (621) located directly above the brake component (61, 62) of the rotor shaft (4) in a vertical direction, where when energized, the second electromagnet (621) has a magnetic field intensity greater than that of the first electromagnet (622).

5. The centrifugal compressor according to claim 2, wherein the plurality of sets of electromagnets (621, 622, 623) are consisted of a first electromagnet (622) located directly below the brake component (61, 62) of the rotor shaft (4), and a second electromagnet and a third electromagnet located symmetrically on both sides above the brake component (61, 62) of the rotor shaft (4) respectively in a vertical direction, where the first electromagnet (622), the second electromagnet (621), and the third electromagnet (623) have substantially the same magnetic field intensity.

6. The centrifugal compressor according to any of claims 1-5, wherein each electromagnet of the plurality of sets of electromagnets (621, 622, 623) comprises a magnetic conductor and a coil winding (64), the magnetic conductor comprising an arc-shaped section (631) and a first end portion (632) and a second end portion (633) extending towards the brake component (61, 62) from both ends of the arc-shaped section (631), and the coil winding being wound on the arc-shaped section (631), where when the coil winding (64) is energized, the first end portion (632) and the second end portion (633) have opposite first and second polarities, respectively.

7. The centrifugal compressor according to any of claims 1-5, wherein each electromagnet of the plurality of sets of electromagnets (621, 622, 623) comprises a magnetic conductor and a coil winding, the magnetic conductor comprising an arc-shaped section (631), and a middle end portion (634), a first end portion (632) and a second end portion (633) extending towards the brake component (621, 622, 623) respectively from the middle and from both ends of the arc-shaped section (631), the coil winding being wound on the middle end portion (634), where when the coil winding (64) is energized, the middle end portion (634) has a first polarity, and the first end portion (632) and the second end portion (633) have a second polarity opposite to the first polarity, respectively.

8. The centrifugal compressor according to any of claims 1-7, wherein the brake component (61, 62) is a brake disc connected to the rotor shaft, the brake disc is made of magnetic conductive material, wherein the centrifugal compressor further comprises an axial magnetic bearing assembly (32) that restrains the rotor shaft axially, and radial magnetic bearing assemblies (22, 24) that supports the rotor shaft radially from both ends of the rotor shaft, where the axial magnetic bearing assembly (32), the radial magnetic bearing assemblies (22, 24) and the plurality of sets of electromagnets (621, 622, 623) are each powered by a backup power supply in case of abnormal power outage.

9. The centrifugal compressor according to any of claims 1-8, wherein the sensor device (51, 52) comprises two proximity sensors arranged at radial outward of the rotor shaft (4) at the same axial position, at an interval in a circumferential direction while detectable features are provided at the axial position corresponding to the proximity sensors on the rotor shaft (4), where the controller determines whether the rotor shaft (4) is rotating reversely or has a reversal trend based on sequence and interval time of signals sent by the two proximity sensors, and supplies power to the plurality of sets of electromagnets when the rotor shaft is rotating reversely or has a reversal trend.

10. A refrigeration system, wherein the refrigeration system comprises a centrifugal compressor according to any of claims 1-9.
